# EUROPEAN PATENT APPLICATION

(11) **EP 4 670 835 A1**
(43) Date of publication of application: **31.12.2025**
(21) Application number: 24760558.7
(22) Date of filing: 21.02.2024
(51) Int. Cl.: B01J 19/00, C01G 53/00, H01M 4/525, H01M 4/02

(54) **APPARATUS AND METHOD FOR MANUFACTURING POSITIVE ELECTRODE ACTIVE MATERIAL PRECURSOR**

(30) Priority: 21.02.2023 KR 20230023207
(71) Applicant: Posco Future M Co., Ltd., Pohang-si, Gyeongsangbuk-do 37918 (KR)
(72) Inventor: JEUNG, Do Gak, Gumi-si, Gyeongsangbuk-do 39171 (KR); CHOI, Seung Un, Gumi-si, Gyeongsangbuk-do 39171 (KR); LEE, Chang Hyun, Gumi-si, Gyeongsangbuk-do 39171 (KR); NAM, Gyeong Won, Gumi-si, Gyeongsangbuk-do 39171 (KR); JUNG, Kwang Eun, Gumi-si, Gyeongsangbuk-do 39171 (KR); PARK, Jun Young, Gumi-si, Gyeongsangbuk-do 39171 (KR); KIM, Jeong Han, Gumi-si, Gyeongsangbuk-do 39171 (KR)
(74) Representative: Meissner Bolte Partnerschaft mbB
(86) International application number: PCT/KR2024/002235
(87) International publication number: WO 2024/177369

(57) **Abstract**

A method for manufacturing a positive electrode active material precursor according to the present invention includes: a reaction vessel; at least one feed pipe configured to feed a reaction solution into the reaction vessel; and a stirring means disposed at a central portion inside the reaction vessel to stir the reaction solution fed through the feed pipe. The stirring means comprises a shaft and two stages of impellers, and the impellers are inclined at an angle of 5° to 90° with respect to a horizontal direction.

## Description

### [Technical Field]

The present invention relates to a positive electrode active material precursor manufacturing apparatus and a method for manufacturing the same.

### [Background Art]

With the increasing demand for mobile devices such as smartphones and laptops, along with the growth of the hybrid and electric vehicle markets, the demand for secondary batteries as an energy source has rapidly increased. In particular, lithium secondary batteries, which exhibit high energy density and operating voltage, long cycle life, and low self-discharge rate, are widely used.

To manufacture a positive electrode active material for a lithium secondary battery, a lithium source, a positive electrode active material precursor, and a dopant are required. Among these, for manufacturing the positive electrode active material precursor, instead of the conventional solid-state reaction method, a coprecipitation method is often employed, in which chlorides, nitrides, sulfides, or the like containing the raw materials are precipitated as hydroxides in an alkaline solution and grown to the desired particle size.

When manufacturing a positive electrode active material precursor by the coprecipitation method, large-capacity reactors are generally used. However, as the reaction scale increases, the uniformity of particle growth is impaired and fines are formed, making it very difficult to produce a precursor that has high sphericity while also maintaining a uniform shape.

Therefore, there is a need to develop a manufacturing apparatus and method for a positive electrode active material precursor that can achieve excellent sphericity and a uniform precursor shape.

### [Detailed Description of the Invention]

### [Technical Problem]

The present invention aims to provide a manufacturing apparatus and method for a positive electrode active material precursor that can suppress fine particle formation and improve the growth uniformity and sphericity of the positive electrode active material precursor.

### [Technical Solution]

The present invention provides a positive electrode active material precursor manufacturing apparatus comprising: a reaction vessel; at least one feed pipe configured to feed a reaction solution into the reaction vessel; and a stirring means disposed at a central portion inside the reaction vessel to stir the reaction solution fed through the feed pipe, wherein the stirring means comprises a shaft and two stages of impellers, and the impellers are inclined at an angle of 5° to 90° with respect to a horizontal direction.

The present invention also provides a method for manufacturing a positive electrode active material precursor, the method comprising: feeding an initial solution into a reaction vessel; feeding a reaction solution into the reaction vessel in which the initial solution has been fed; and stirring the initial solution and the reaction solution with a stirring means to obtain a positive electrode active material precursor, wherein the stirring means comprises a shaft and two stages of impellers, the impellers are inclined at an angle of 5° to 90° with respect to a horizontal direction, and the initial solution is fed in an amount sufficient to fully submerge the two stages of impellers.

### [Advantageous Effects]

The positive electrode active material precursor manufacturing apparatus and method according to the present invention can suppress fine particle formation and improve the growth uniformity and sphericity of the positive electrode active material precursor. In addition, by improving internal concentration uniformity, impurities can be controlled and compositional accuracy can be enhanced.

### [Brief Description of Drawings]

FIGS. 1 and 2 are views illustrating an apparatus for manufacturing a positive electrode active material precursor according to some embodiments of the present invention.
FIG. 3 is a side view of a stirring means according to some embodiments of the present invention.
FIG. 4 is a plan view of a positive electrode active material precursor manufacturing apparatus according to some embodiments of the present invention.
FIGS. 5 and 6 are SEM images of positive electrode active material precursors manufactured according to examples and comparative examples.
FIGS. 7 and 8 are views showing observation of supernatants for measuring unreacted Ni in positive electrode active material precursors manufactured according to examples and comparative examples.

### [Mode for Carrying Out the Invention]

Hereinafter, embodiments of the present invention will be described in detail. However, these embodiments are presented by way of example only, and the present invention is not limited thereto, but is defined only by the scope of the claims described below.

In the present invention, when it is stated that one member is disposed "on" another member, this includes not only cases where the one member is in direct contact with the other member, but also cases where another member is interposed between the two members.

In the present invention, when it is stated that a certain part "comprises" a certain component, unless specifically stated otherwise, this does not exclude the presence of other components, but rather means that other components may be further included.

### <Apparatus for Manufacturing Positive Electrode Active Material Precursor>

In one aspect, the present invention relates to a positive electrode active material precursor manufacturing apparatus (100) comprising: a reaction vessel (10); at least one feed pipe (20, 30, 40) configured to feed a reaction solution into the reaction vessel (10); and a stirring means (60) disposed at a central portion inside the reaction vessel (10) to stir the reaction solution fed through the feed pipe (20, 30, 40), wherein the stirring means (60) comprises a shaft (61) and two stages of impellers (62, 63), and the impellers (62, 63) are inclined at an angle of 5° to 90° with respect to a horizontal direction.

The positive electrode active material precursor manufacturing apparatus (100) according to the present invention can suppress splashing of the reaction solution by using the two-stage impellers (62, 63), thereby controlling the formation of fine particles. Accordingly, the apparatus can improve the growth uniformity and sphericity of the positive electrode active material precursor.

The positive electrode active material precursor manufacturing apparatus (100) according to the present invention may be a coprecipitation reaction apparatus for manufacturing a catalyst or a positive electrode active material precursor for a lithium secondary battery, based on a batch-type reactor and including a continuous stirred tank reactor (CSTR).

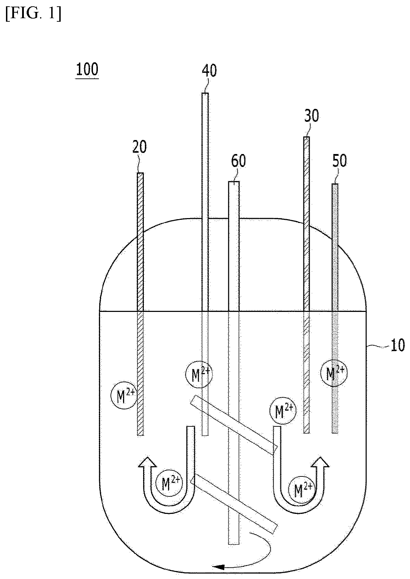

FIG. 1 schematically illustrates a positive electrode active material precursor manufacturing apparatus (100) according to some embodiments of the present invention. The apparatus may include a reaction vessel (10). The reaction vessel (10) may be formed in a cylindrical shape with an open top for feeding the reaction solution. Alternatively, although not illustrated, the reaction vessel (10) may be in the form of a structure in which a central cylindrical body, a bottom portion, and a top cover portion are assembled via a flange structure, but is not limited thereto. The reaction vessel (10) accommodates the reaction solution therein for reaction and may further include a drain portion for discharging the produced positive electrode active material precursor to the outside, without limitation.

The positive electrode active material precursor manufacturing apparatus (100) according to the present invention includes at least one feed pipe (20, 30, 40) for feeding the reaction solution into the reaction vessel (10). In one embodiment, the feed pipe (20, 30, 40) may include a first feed pipe (20) for feeding a first solution containing NH₄OH, a second feed pipe (30) for feeding a second solution containing NaOH, and a third feed pipe (40) for feeding a metal solution. Although not shown, each feed pipe (20, 30, 40) may be connected to a corresponding storage tank in which the reaction solution is stored. The feed pipes (20, 30, 40) may be provided with flow meters, but are not limited thereto.

The feed pipes (20, 30, 40) are not particularly limited in material as long as they have corrosion resistance and chemical resistance to the first solution, the second solution, and the metal solution. For example, the feed pipes (20, 30, 40) may be made of at least one material selected from stainless steel, PP, PVC, PE, and PVDF. The diameter and thickness of the feed pipes (20, 30, 40) may be appropriately designed according to the capacity of the reaction vessel (10).

For example, in the case of the reaction vessel (10) having a volume of 10 to 30 tons, the feed pipes (20, 30, 40) may have a diameter of 5 to 80 mm, preferably 10 to 65 mm, and more preferably 15 to 50 mm, without limitation. When the diameter of the feed pipes (20, 30, 40) is within the above range, feeding of the first solution, the second solution, and the metal solution is facilitated, which is preferable. In the case of the reaction vessel (10) having a volume of 10 to 30 tons, the feed pipes (20, 30, 40) may have a thickness of 1 to 15 mm, preferably 1.5 to 10 mm, and more preferably 2 to 5 mm, without limitation. When the thickness of the feed pipes (20, 30, 40) is within the above range, the durability of the feed pipes (20, 30, 40) is excellent, which is preferable.

In another embodiment of the present invention, the first feed pipe (20) and the third feed pipe (40) may be disposed adjacent to each other. Specifically, when the first feed pipe (20) and the third feed pipe (40) are disposed adjacent to each other, it is advantageous for the formation of a coordination compound between the metal solution fed through the third feed pipe (40) and NH₄OH in the first solution fed through the first feed pipe (20), allowing control of the reaction rate and contributing to uniform particle growth. More specifically, when the metal solution reacts with NH₄OH in the first solution, a coordination compound is formed, which then reacts with NaOH in the second solution to proceed with the coprecipitation reaction. Therefore, by arranging the first feed pipe (20) and the third feed pipe (40) adjacent to each other, the rapid reaction rate can be controlled. In addition, it is possible to suppress the formation of agglomerates that can cause clogging at the ends of the feed pipes (20, 40).

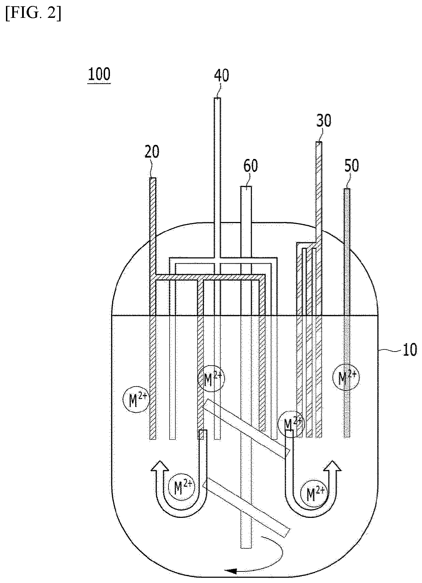

In another embodiment of the present invention, the feed pipes (20, 30, 40) may be branched into three to four branches from a branching point. Specifically, referring to FIG. 2, the feed pipes (20, 30, 40) may be branched into three branches from the branching point. When the feed pipes (20, 30, 40) are branched into three to four branches from the branching point, it is advantageous for improving the internal diffusibility of the reaction solution. More specifically, when the feed pipes (20, 30, 40) are branched, the internal diffusibility of the reaction solution can be improved, thereby inducing uniform particle growth, controlling impurities, and enhancing compositional accuracy. In addition, the concentration deviation inside the reaction solution can be improved, which is preferable.

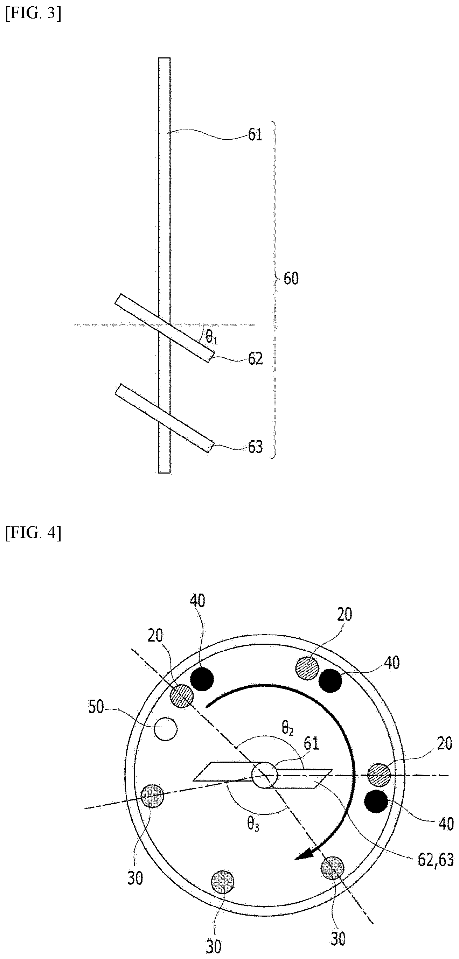

FIG. 4 illustrates a plan view of a positive electrode active material precursor manufacturing apparatus (100) according to some embodiments of the present invention. Referring to FIG. 4, the first feed pipe (20) and the third feed pipe (40) may be branched into three to four branch pipes from a branching point, and in this case, the branch pipes of the first feed pipe (20) may be disposed adjacent to the branch pipes of the third feed pipe (40). When the feed pipes (20, 40) are branched, the distance between adjacent branch pipes is preferably uniform. For example, when the first feed pipe (20) is branched into three branch pipes, the three branch pipes may be branched so as to have equal spacing.

Referring again to FIG. 4, in the case of the first feed pipe (20) and the third feed pipe (40), the angle θ₂. formed between a line extending from the first branch pipe to the central shaft (61) of the impellers (62, 63) described below, and a line extending from the last branch pipe to the shaft (61), may be 135° or less, preferably from 90° to 135°. In the case of the second feed pipe (30), the angle θ₃ formed between a line extending from the first branch pipe to the shaft (61) and a line extending from the last branch pipe to the shaft (61) may be 120° or less, preferably from 60° to 120°. Preferably, each branch pipe is disposed at equal intervals within the above angular range.

When θ₂ and θ₃ satisfy the above ranges, the solutions fed through the feed pipes (20, 30, 40) can be uniformly diffused within the reaction solution, thereby improving the internal concentration uniformity, suppressing non-uniform particle growth, and reducing impurities. Specifically, when the first feed pipe (20), which feeds the first solution containing NH₄OH, and the third feed pipe (40), which feeds the metal solution, are disposed adjacent to each other, it is possible to suppress the formation of agglomerates at the outlet of the third feed pipe (40).

The second feed pipe (30), which feeds the second solution containing NaOH, may be disposed on the side opposite to the first feed pipe (20) and the third feed pipe (40). In general, when a metal solution is fed into a reaction solution having a pH in the range of 10 to 13, precipitation occurs immediately. As the feed rate (amount per unit time) of the solution increases, precipitation can proceed without sufficient uniform diffusion of ions such as metal ions, sodium ions, and sulfate ions, resulting in concentration gradients inside the reaction solution. This causes an increase in the content of impurities such as unreacted metals, Na, and S ions in the synthesized positive electrode active material precursor. Particularly, when unreacted metals remain, overall process loss increases, leading to higher processing costs.

When the second feed pipe (30) is disposed opposite to the first feed pipe (20) and the third feed pipe (40), specifically such that the center of θ₂ and θ₃ is arranged to satisfy 180° relative to the shaft (61), the metal ions can form coordination compounds, facilitating control of the reaction rate and thereby suppressing the above-described problems.

The diameters of the branch pipes may be the same or different, but it is preferable that the diameters after branching are identical. When the branch pipes have the same diameter, it is advantageous for flow rate control in the branch pipes. Specifically, when the first feed pipe (20) includes branch pipes branched into three, the branch pipes preferably all have the same diameter. Additionally, referring to FIG. 2, the diameter of each feed pipe (20, 30, 40) before branching is preferably greater than or equal to the diameter of the branch pipes after branching.

The branching point may be located at a position from 1/20 to 1/5, preferably from 1/10 to 1/7, of the length from the upper end of the feed pipe (20, 30, 40), but is not limited thereto.

In another embodiment of the present invention, the feed pipes (20, 30, 40) may further include a deionized water (DI water) feed pipe and a nitrogen feed pipe (50). The deionized water feed pipe may be provided to feed deionized water included in an initial solution, described later. Since the deionized water fed through the deionized water feed pipe does not need to be supplied during the manufacturing process of the positive electrode active material precursor, the position of the deionized water feed pipe is not particularly limited.

The nitrogen feed pipe (50) may be provided for nitrogen purging to remove dissolved oxygen in the initial solution and to create a non-oxidizing atmosphere inside the reaction vessel (10). Referring to FIG. 4, the nitrogen feed pipe (50) may be disposed relatively close to the first feed pipe (20), although the invention is not limited thereto.

The distal ends of the feed pipes (20, 30, 40) may be located at a position from 1/20 to 2/5, preferably from 1/10 to 1/7, of the height from the bottom of the reaction vessel (10). When the distal ends of the feed pipes (20, 30, 40) are located within the above range, the distance and arrangement relative to an agitation means (60), described later, are appropriate, enabling easy agitation and uniform diffusion along the vortex flow, which is preferable. The distal ends of the feed pipes (20, 30, 40) are preferably located at the same height from the bottom of the reaction vessel (10) (see FIG. 2).

The positive electrode active material precursor manufacturing apparatus (100) according to the present invention comprises an agitation means (60) disposed at a central portion inside the reaction vessel (10) and configured to agitate the reaction solution fed through the feed pipes (20, 30, 40). The agitation means (60) comprises a shaft (61) and two impellers (62, 63) arranged in two stages, and each of the impellers (62, 63) has an angle of from 5° to 90° with respect to a horizontal direction.

In general, mass-production-type reactors increase the feed amount of the reaction solution for large-volume synthesis, and employ a multi-stage impeller arrangement of three or more stages, set at a spacing relative to the volume, to agitate the solution. In such cases, as the reaction scale increases, uniformity is impaired, fine particles are formed, and it becomes very difficult to produce a precursor having a uniform morphology.

Furthermore, as the liquid level of the reaction solution rises during the reaction, the moment the reaction solution comes into contact with the impellers, the reaction solution is splashed. While the splashed reaction solution remains on the wall surface, it does not receive supply of the reaction raw materials such as metal ions, NaOH, and NH₄OH, thereby hindering particle growth of the positive electrode active material precursor and causing non-uniform growth. This in turn results in the formation of fine particles, thereby degrading particle uniformity and sphericity.

However, the present invention, by employing two impellers (62, 63), can suppress splashing of the reaction solution, thereby controlling the formation of fine particles, and offers the advantage of improving growth uniformity and sphericity.

In the positive electrode active material precursor manufacturing apparatus (100) according to the present invention, each of the impellers (62, 63) has an angle of from 5° to 90° with respect to a horizontal direction.

FIG. 3 illustrates a side view of an agitation means (60) according to some embodiments of the present invention. Referring to FIG. 3, the impellers (62, 63) may be inclined such that an angle θ₁ defined with respect to the horizontal direction is from 5° to 90°, preferably from 15° to 70°, and more preferably from 30° to 45°. In other words, each of the impellers (62, 63) may be inclined such that the blade angle slopes from an upper left side toward a lower right side at an inclination of from 5° to 90°.

By configuring the impellers (62, 63) to have an angle within the above range, a vortex may be formed from the lower end toward the upper end of the reaction vessel (10). The rotational direction of the impellers (62, 63) may be clockwise. Because the impellers (62, 63) form such a vortex, diffusion of ions in the reaction solution can be smoothly achieved, eliminating concentration deviations. As a result, growth of the positive electrode active material precursor can be made more uniform.

In another embodiment of the present invention, the two-stage impeller arrangement (62, 63) may be configured such that the vertical center of the lower impeller (63) is positioned at a point from 1/15 to 1/5, preferably from 1/8 to 1/6, of the height from the bottom of the reaction vessel (10). In another embodiment, the vertical center of the upper impeller (62) may be positioned at a point from 1/4 to 1/2, preferably from 1/4 to 1/3, of the height from the bottom of the reaction vessel (10). In particular, the positions of the upper impeller (62) and the lower impeller (63) are defined with respect to the vertical centers of the respective impellers (62, 63). More specifically, referring to FIG. 3, in the side view of the agitation means (60), the vertical center of the upper impeller (62) and the vertical center of the lower impeller (63) may be located at points from 1/4 to 1/2 and from 1/15 to 1/5, respectively, of the height from the bottom of the reaction vessel (10).

When the positions of the upper impeller (62) and the lower impeller (63) satisfy the above ranges, the vortex flow formed by agitation is optimized, thereby producing a positive electrode active material precursor with excellent uniformity and sphericity.

The diameter of the impellers (62, 63) may be appropriately varied depending on the capacity of the reaction vessel (10). For example, in the case of a reaction vessel (10) having a volume of from 3 to 30 tons, the diameter of each of the impellers (62, 63) may be from 400 mm to 1550 mm, preferably from 700 mm to 1200 mm, and more preferably from 800 mm to 1050 mm. When the diameter of the impellers (62, 63) is within the above range, it is possible to minimize the number of impellers (62, 63) while manufacturing a positive electrode active material precursor having a uniform particle size and excellent sphericity, which is preferable.

The upper impeller (62) and the lower impeller (63) may have different diameters or the same diameter. From the perspective of optimizing vortex flow, it is preferable that the upper impeller (62) and the lower impeller (63) have the same diameter.

In another embodiment of the present invention, the two-stage impeller arrangement (62, 63) may be configured to have the same inclination angle with respect to the horizontal direction. Referring to FIG. 3, the upper impeller (62) and the lower impeller (63) may be inclined to have the same angle with respect to the horizontal direction. When the upper impeller (62) and the lower impeller (63) have the same inclination angle, vortex formation in the reaction solution is optimized, enabling uniform ion diffusion within the reaction solution, and thus allowing the manufacture of a positive electrode active material precursor having excellent uniformity and sphericity.

The positive electrode active material precursor manufacturing apparatus (100) according to the present invention may further include, although not illustrated, any known pumps, heaters, coolers, drain lines, and the like, provided that they do not interfere with the objectives of the invention. For example, the reaction vessel (10) may be provided at a lower portion thereof with a drain line for recovering the manufactured positive electrode active material precursor. A heater and a cooler for controlling the temperature of the solution in the reaction vessel (10) may be provided on an outer periphery of the reaction vessel (10). A sensing tank, which circulates the solution discharged from the reaction vessel (10) using a circulation pump, may also be provided on one side of an upper or lower portion of the reaction vessel (10), although the invention is not limited thereto. In addition, the drain line may be connected to a filtration device, but is not limited thereto.

The positive electrode active material precursor manufacturing apparatus (100) according to the present invention has the advantage of being able to produce a positive electrode active material precursor with excellent uniformity and sphericity and minimized impurities without the need for additional additives. In particular, the apparatus makes it possible to easily obtain a desired positive electrode active material precursor regardless of composition.

### <Positive Electrode Active Material Precursor Manufacturing Method>

Another aspect of the present invention relates to a method for manufacturing a positive electrode active material precursor, the method comprising: introducing an initial solution into a reaction vessel (10); introducing a reaction solution into the reaction vessel (10) containing the initial solution; and agitating the initial solution and the reaction solution by an agitating means (60) to obtain the positive electrode active material precursor, wherein the agitating means (60) comprises a shaft (61) and two-stage impellers (62, 63), the impellers (62, 63) are inclined at an angle of from 5° to 90° relative to the horizontal direction, and the initial solution is introduced in an amount sufficient to completely submerge the two-stage impellers (62, 63). In other words, this aspect of the invention relates to a manufacturing method for a positive electrode active material precursor using the positive electrode active material precursor manufacturing apparatus (100) described above.

The method for manufacturing a positive electrode active material precursor according to the present invention includes introducing an initial solution into the reaction vessel (10). The reaction vessel (10), the agitating means (60), and the feed pipes (20, 30, 40) described below may be applied in accordance with the aforementioned embodiments.

In one embodiment, the initial solution may comprise deionized water. The initial solution is introduced in an amount sufficient to submerge both the upper impeller (62) and the lower impeller (63) of the two-stage impellers (62, 63). That is, in the manufacturing method according to the present invention, the reaction is initiated with both impellers (62, 63) submerged, thereby suppressing non-uniform diffusion in the reaction solution and preventing splashing of the reaction solution.

In conventional systems employing three-stage or more multi-stage impellers, it is practically difficult to fully submerge all of the impellers. Consequently, as the liquid level in the reaction solution rises during the reaction, the reaction solution contacts the impellers at different times, causing splashing. The splashed solution remains on the vessel wall without being supplied with reaction raw materials such as metal ions, NaOH, and NH₄OH, which inhibits particle growth of the positive electrode active material precursor.

In contrast, the manufacturing method according to the present invention initiates the reaction with both impellers (62, 63) submerged, thereby suppressing splashing of the reaction solution and preventing retention of the reaction solution on the wall of the reaction vessel (10). As a result, fine powder formation is controlled, and growth uniformity and sphericity of the positive electrode active material precursor are improved.

The initial solution may further comprise at least one selected from the group consisting of NH₄OH and NaOH. In other words, the initial solution may comprise a portion of a first solution containing NH₄OH and a portion of a second solution containing NaOH. The NH₄OH may be present in an amount of from 0 to 10 wt%, preferably from 0 to 5 wt%, and more preferably from 0.1 to 3 wt%, based on 100 wt% of the initial solution. The NaOH may be present in an amount of from 0 to 10 wt%, preferably from 0 to 5 wt%, and more preferably from 0.1 to 3 wt%, based on 100 wt% of the initial solution. The deionized water may be present in an amount sufficient to make up the remainder to 100 wt% of the initial solution.

When the NH₄OH and NaOH are each included within the above ranges, the reaction efficiency can be further improved. Specifically, inclusion within these ranges enables the initial particle size of the manufactured positive electrode active material precursor to be appropriate and uniform.

The amount of the initial solution is not particularly limited as long as it is sufficient to submerge both of the two-stage impellers (62, 63). The method for manufacturing a positive electrode active material precursor according to the present invention may further comprise agitating the initial solution.

The method for manufacturing a positive electrode active material precursor according to the present invention may further comprise performing nitrogen purging (N₂ purge) of the initial solution, although it is not limited thereto. The step of agitating the initial solution and the step of performing nitrogen purging of the initial solution may be carried out simultaneously. Specifically, the method may comprise agitating the initial solution while performing nitrogen purging. Agitating the initial solution while purging with nitrogen can remove dissolved oxygen from the initial solution and improve the uniformity of the manufactured positive electrode active material precursor. Accordingly, it is preferable that the method further comprise the step of agitating the initial solution while purging with nitrogen. The supply amount and supply time of the nitrogen are not particularly limited in the present invention.

The method for manufacturing a positive electrode active material precursor according to the present invention comprises: introducing a reaction solution into the reaction vessel (10) containing the initial solution; and agitating the initial solution and the reaction solution by the agitating means (60) to obtain the positive electrode active material precursor.

In another embodiment, the reaction solution may comprise a first solution containing NH₄OH, a second solution containing NaOH, and a metal solution. The first solution, the second solution, and the metal solution may be included in an appropriate ratio depending on the composition of the positive electrode active material precursor to be manufactured, and the desired morphology of the positive electrode active material precursor may be obtained by controlling the flow rates of the first solution, the second solution, and the metal solution.

The metal solution may comprise at least one metal salt selected from the group consisting of nickel, cobalt, and manganese. For example, the nickel (Ni) may be included in the metal solution in the form of Ni(OH)₂, NiO, NiOOH, NiCO₃·2Ni(OH)₂·4H₂O, NiC₂O₂·2H₂O, Ni(NO₃)₂·6H₂O, NiSO₄, NiSO₄·6H₂O, nickel fatty acid salts, or nickel halides, and at least one of these may be used. The cobalt may be included in the metal solution in the form of Co(OH)₂, CoOOH, Co(OCOCH₃)₂·4H₂O, Co(NO₃)₂·6H₂O, or CoSO₄·7H₂O, and at least one of these may be used. The manganese (Mn) may be included in the metal solution in the form of manganese oxides such as Mn₂O₃, MnO₂, and Mn₃O₄; manganese salts such as MnCO₃, Mn(NO₃)₂, MnSO₄, manganese acetate, manganese dicarboxylates, manganese citrate, and manganese fatty acid salts; oxyhydroxides; and manganese chlorides, and at least one of these may be used.

In addition, the metal solution may further comprise at least one metal salt selected from the group consisting of Al, Zr, B, W, Mo, Cr, Ta, Nb, Mg, Ce, Hf, La, Ti, Sr, Ba, F, P, S, and Y. For example, the metal solution may further comprise at least one acetate, nitrate, sulfate, halide, sulfide, hydroxide, oxide, or oxyhydroxide of the above metals.

The flow rate of the reaction solution may be appropriately varied depending on the feed pipe (20, 30, 40) through which it is introduced. In one embodiment, the metal solution may be introduced at a flow rate of from 80 to 3,200 kg/h, preferably from 104 to 2,250 kg/h, and more preferably from 120 to 1,950 kg/h. When the third feed pipe (40) through which the metal solution is introduced is branched into three branches, the metal solution may be introduced into each branch pipe at a flow rate of from 30 to 1,000 kg/h, preferably from 38 to 750 kg/h, and more preferably from 40 to 650 kg/h. When the third feed pipe (40) is branched into four branches, the metal solution may be introduced into each branch pipe at a flow rate of from 20 to 800 kg/h, preferably from 25 to 680 kg/h, and more preferably from 30 to 550 kg/h.

For the second solution, the flow rate may be appropriately adjusted depending on the desired morphology. In one embodiment, the second solution may be introduced at a flow rate of from 40 to 1,800 kg/h, preferably from 60 to 1,650 kg/h, and more preferably from 70 to 1,330 kg/h. When the second feed pipe (30) is branched into three branches, the second solution may be introduced into each branch pipe at a flow rate of from 15 to 550 kg/h, preferably from 20 to 480 kg/h, and more preferably from 22 to 430 kg/h. When the second feed pipe (30) is branched into four branches, the second solution may be introduced into each branch pipe at a flow rate of from 10 to 450 kg/h, preferably from 15 to 370 kg/h, and more preferably from 17 to 330 kg/h.

For the first solution, the flow rate may be appropriately adjusted depending on the desired morphology. For example, the first solution may be introduced at a flow rate of from 10 to 1,320 kg/h, preferably from 20 to 1,200 kg/h, and more preferably from 24 to 690 kg/h. When the first feed pipe (20) is branched into three branches, the first solution may be introduced into each branch pipe at a flow rate of from 5 to 400 kg/h, preferably from 8 to 230 kg/h. When the first feed pipe (20) is branched into four branches, the first solution may be introduced into each branch pipe at a flow rate of from 3 to 330 kg/h, preferably from 5 to 180 kg/h, although the invention is not limited thereto.

In another embodiment of the present invention, the molar ratio of the metal ions in the metal solution to NH₄OH may be from 1:0.2 to 1:0.9, preferably from 1:0.2 to 1:0.7. When the molar ratio of the metal in the metal solution to NH₄OH satisfies the above range, it is possible to suppress the generation of unreacted transition metals, which is preferable.

In another embodiment, the molar ratio of the metal ions in the metal solution to NaOH may be from 1:1.5 to 1:2.5, preferably from 1:1.8 to 1:2.3, and more preferably from 1:1.94 to 1:2.05. When the molar ratio of the metal in the metal solution to NaOH satisfies the above range, it is possible to suppress the generation of unreacted transition metals, which is preferable.

When the initial solution contains NH₄OH and/or NaOH, the first solution containing NH₄OH and the second solution containing NaOH may each be included in an amount that satisfies the respective molar ratio with the metal in the metal solution. The method for manufacturing a positive electrode active material precursor according to the present invention provides the advantage that, because concentration deviation of the reaction solution during the reaction is suppressed and the injection of the first solution and the second solution at an appropriate ratio is facilitated, process loss caused by unreacted metals can be reduced. Furthermore, it induces uniform diffusion, thereby improving the compositional accuracy of the manufactured positive electrode active material precursor.

In another embodiment of the present invention, the step of introducing the reaction solution and the step of agitating the initial solution and the reaction solution by the agitating means (60) to obtain the positive electrode active material precursor may be carried out simultaneously. That is, the method for manufacturing a positive electrode active material precursor according to the present invention may comprise introducing the reaction solution while agitating the initial solution and the reaction solution by the agitating means (60) to obtain the positive electrode active material precursor. The present invention does not particularly limit the agitation speed of the agitating means (60). For example, the initial solution and the reaction solution may be agitated at a speed of from 30 to 1,500 rpm, preferably from 50 to 1,200 rpm, and more preferably from 60 to 800 rpm.

The positive electrode active material precursor may be recovered through the drain line provided at the lower portion of the reaction vessel (10) and may further undergo steps such as filtration, washing, and drying. The recovery, filtration, washing, and drying may be performed by conventional methods, and are not particularly limited in the present invention.

The method for manufacturing a positive electrode active material precursor according to the present invention provides the advantage of suppressing unreacted materials. The positive electrode active material precursor manufactured according to the present invention exhibits excellent uniformity and sphericity, and has a low content of impurities. In another embodiment of the present invention, the positive electrode active material precursor may have a Na content of 550 ppm or less, specifically 300 ppm or less, more specifically 100 ppm or less, and most specifically 52 ppm or less. In another embodiment of the present invention, the positive electrode active material precursor may have an S content of 5,000 ppm or less, specifically 3,500 ppm or less, and more specifically 1,590 ppm or less.

Preferred embodiments and comparative examples of the present invention are described below. However, the following embodiments are merely preferred examples of the present invention, and the present invention is not limited to the following embodiments.

### Example

An initial solution containing deionized water, NaOH, and NH₄OH was introduced into a reaction vessel having an agitating means positioned at the central interior thereof and equipped with two impellers, such that both impellers were fully submerged. Specifically, based on 100 wt% of the total initial solution, 1.5 wt% NaOH, 1.5 wt% NH₄OH, and the balance deionized water were introduced and agitated. Both impellers were disposed at an angle of 45° with respect to the horizontal direction, with the vertical center of the upper impeller positioned at 1/3 of the height from the lower end of the reaction vessel, and the vertical center of the lower impeller (63) positioned at 1/6 of the height from the lower end of the reaction vessel.

Thereafter, while maintaining agitation, nitrogen was purged into the initial solution via a nitrogen supply pipe at a flow rate of 10 L/min to remove dissolved oxygen from the initial solution. NiSO₄, CoSO₄, and MnSO₄ were mixed in deionized water at a molar ratio of nickel:cobalt:manganese of 0.89:0.04:0.07 to prepare a 2.5 M metal solution.

Subsequently, while maintaining agitation, an aqueous NH₄OH solution, an aqueous NaOH solution, and the metal solution were introduced as the reaction solution. Each of the pipes for introducing the NH₄OH solution, NaOH solution, and metal solution was configured as a three-branch feed pipe. The NH₄OH solution was introduced at a flow rate of 23 kg/h, the NaOH solution at 210 kg/h, and the metal solution at 400 kg/h, such that the ratio of NH₄OH to the total moles of metal ions was 1:0.6, and the ratio of NaOH to the total moles of metal ions was 1:1.97. Agitation was performed at 550 rpm, and the reaction was maintained for 28 hours to obtain a positive electrode active material precursor via a coprecipitation method.

### Comparative Example

A positive electrode active material precursor was prepared in the same manner as in the above Example, except that a conventional positive electrode active material precursor production apparatus equipped with a three-stage impeller and non-branched feed pipes was used.

### Experimental Example

### (1) SEM Measurement Results

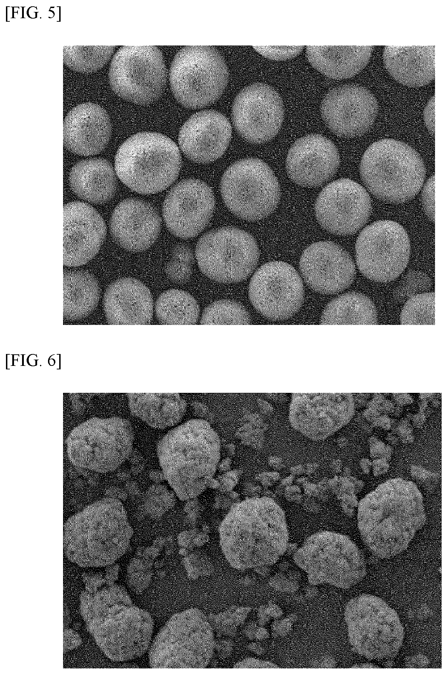

The positive electrode active material precursors prepared according to the Example and the Comparative Example were observed by scanning electron microscopy (SEM), and the results are shown in FIG. 5 (Example) and FIG. 6 (Comparative Example).

### (2) ICP Analysis

In order to determine the impurity content of the positive electrode active material precursors prepared according to the Example and the Comparative Example, inductively coupled plasma (ICP) analysis was performed using an Agilent ICP 720-ES instrument.

Two grams of precursor powder were dissolved in 10 mL of high-purity hydrochloric acid in an Erlenmeyer flask. The flask was covered with glass and heated on a hot plate to ensure complete dissolution of the precursor. After cooling to room temperature, the solution was transferred to a 100 mL volumetric flask, washing the Erlenmeyer flask 3-4 times with deionized (DI) water. The volumetric flask was then filled to the 100 mL mark with DI water and homogenized. Five milliliters of this solution were withdrawn using a 5 mL pipette and transferred to a 50 mL volumetric flask for secondary dilution. The 50 mL volumetric flask was filled to the mark with 10% hydrochloric acid and homogenized, and this 50 mL solution was used for ICP measurement. The results are presented in Table 1 below.

**[Table 1]**

| Impurity Content (ppm) | Example | Comparative Example |
|---|---|---|
| Na content | 52 | 184 |
| S content | 1587 | 3066 |

### (3) Measurement of Unreacted Ni

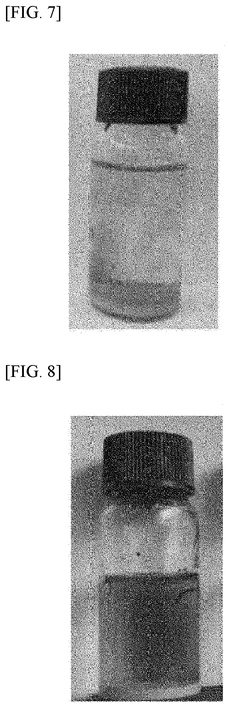

Unreacted Ni in the positive electrode active material precursors prepared according to the Example and the Comparative Example was measured. After completion of the coprecipitation reaction, 15 g of the reaction solution containing the positive electrode active material precursor was accurately weighed and aliquoted into a vial. The vial was allowed to stand for 1 hour to precipitate the positive electrode active material precursor, and the supernatant was collected. About 5 g of the supernatant was analyzed using an inductively coupled plasma (ICP) analyzer (Agilent ICP 720-ES). The results are shown in Table 2. Figures 7 and 8 schematically illustrate the supernatant of the positive electrode active material precursor prepared according to the Example and the Comparative Example, respectively.

**[Table 2]**

| Unit: ppm | Example | Comparative Example |
|---|---|---|
| Unreacted Ni content | 17 | 1906 |

Referring to Figures 5 to 8 and Tables 1 and 2, it can be seen that the positive electrode active material precursor prepared according to the Example exhibits excellent uniformity and sphericity, and contains a reduced amount of unreacted metals and impurities. Specifically, as shown in Figures 7 and 8, when nickel ions form a coordination bond with ammonia, the solution exhibits a blue coloration. In the case of Figure 8, the supernatant appears dark in color, indicating that a significant amount of unreacted transition metals remains.

It will be apparent to those skilled in the art that the present invention is not limited to the foregoing Example, but may be embodied in various other forms without departing from the spirit or essential characteristics of the invention. Accordingly, the above-described Example is to be understood as being illustrative and not restrictive in all respects, and the scope of the present invention is defined by the appended claims.

### Reference Numerals

10: Reaction vessel
20: First feed pipe
30: Second feed pipe
40: Third feed pipe
50: Nitrogen feed pipe
60: stirring means
61: Shaft
62: Upper impeller
63: Lower impeller
100: Apparatus for manufacturing a positive electrode active material precursor

## Claims

1. A positive electrode active material precursor manufacturing apparatus comprising:
a reaction vessel;
at least one feed pipe configured to feed a reaction solution into the reaction vessel; and
a stirring means disposed at a central portion inside the reaction vessel to stir the reaction solution fed through the feed pipe,
wherein the stirring means comprises a shaft and two stages of impellers,
and the impellers are inclined at an angle of 5° to 90° with respect to a horizontal direction.

2. The positive electrode active material precursor manufacturing apparatus of claim 1, wherein a vertical center of a lower impeller located at a lower position of the two-stage impellers is positioned at 1/15 to 1/5 of a height from a bottom of the reaction vessel.

3. The positive electrode active material precursor manufacturing apparatus of claim 1, wherein a vertical center of an upper impeller located at an upper position of the two-stage impellers is positioned at 1/4 to 1/2 of a height from a bottom of the reaction vessel.

4. The positive electrode active material precursor manufacturing apparatus of claim 1, wherein the two-stage impellers are inclined to have the same angle with respect to a horizontal direction.

5. The positive electrode active material precursor manufacturing apparatus of claim 1, wherein the two-stage impellers have a diameter of 400 mm to 1550 mm.

6. The positive electrode active material precursor manufacturing apparatus of claim 1, wherein the feed pipe has a diameter of 5 mm to 80 mm.

7. The positive electrode active material precursor manufacturing apparatus of claim 1, wherein the feed pipe has a thickness of 1 mm to 15 mm.

8. The positive electrode active material precursor manufacturing apparatus of claim 1, wherein the feed pipe comprises a first feed pipe for feeding a first solution containing NH₄OH, a second feed pipe for feeding a second solution containing NaOH, and a third feed pipe for feeding a metal solution.

9. The positive electrode active material precursor manufacturing apparatus of claim 1, wherein the feed pipe further comprises a deionized water feed pipe and a nitrogen feed pipe.

10. The positive electrode active material precursor manufacturing apparatus of claim 1, wherein the feed pipe is made of at least one material selected from stainless steel, PP, PVC, PE, and PVDF.

11. The positive electrode active material precursor manufacturing apparatus of claim 8, wherein the first feed pipe and the third feed pipe are arranged adjacent to each other.

12. The positive electrode active material precursor manufacturing apparatus of claim 1, wherein the feed pipe is branched into three to four branches from a branching point.

13. A method for manufacturing a positive electrode active material precursor, comprising:
feeding an initial solution into a reaction vessel;
feeding a reaction solution into the reaction vessel in which the initial solution has been fed; and
stirring the initial solution and the reaction solution with a stirring means to obtain a positive electrode active material precursor,
wherein the stirring means comprises a shaft and two stages of impellers,
the impellers are inclined at an angle of 5° to 90° with respect to a horizontal direction,
and the initial solution is fed such that the two stages of impellers are fully submerged.

14. The method of claim 13, wherein the initial solution comprises deionized water.

15. The method of claim 13, wherein the reaction solution comprises a first solution containing NH₄OH, a second solution containing NaOH, and a metal solution.

16. The method of claim 14, wherein the initial solution further comprises a portion of the first solution and the second solution.

17. The method of claim 13, wherein the step of feeding the reaction solution and the step of stirring the initial solution and the reaction solution with the stirring means to obtain the positive electrode active material precursor are performed simultaneously.

18. The method of claim 15, wherein the molar ratio of metal ions in the metal solution to the NH₄OH is from 1:0.2 to 1:0.9.

19. The method of claim 15, wherein the molar ratio of metal ions in the metal solution to the NaOH is from 1:1.5 to 1:2.5.

20. The method of claim 15, wherein the second solution is fed at a flow rate of 40 kg/h to 1800 kg/h.

21. The method of claim 15, wherein the metal solution is fed at a flow rate of 80 kg/h to 3200 kg/h.

22. The method of claim 13, wherein the positive electrode active material precursor has a Na content of 550 ppm or less.

23. The method of claim 13, wherein the positive electrode active material precursor has an S content of 5000 ppm or less.
